# EUROPEAN PATENT SPECIFICATION

(11) **EP 2 050 599 B1**
(45) Date of publication and mention of the grant of the patent: **26.09.2012**
(21) Application number: 08445032.9
(22) Date of filing: 10.10.2008
(51) Int. Cl.: B60H 1/00

(54) **Air-handling device**
Luftleitvorrichtung
Dispositif de manipulation d'air

(30) Priority: 16.10.2007 SE 0702306
(43) Date of publication of application: 22.04.2009
(73) Proprietor: Mobile Climate Control Sverige AB, 761 21 Norrtälje (SE)
(72) Inventor: Mannerheim, Fredrik, S-113 29 Stockholm (SE); Spehar, Stefan, S-762 31 Rimbo (SE); Weiss, Eric, Oakville, Ontario L6J5T9 (CA)
(74) Representative: Eriksson, Kjell

(56) References cited:
- DE-C1- 19 535 290
- US-A- 5 054 378
- US-A1- 2004 093 883

## Description

### Technical Field of the Invention

The present invention relates to a method for handling air when distributing air inside an elongated vehicle, the method comprising supply of air to a roof air duct inside the vehicle. The invention also relates to a device for handling air when distributing air inside an elongated vehicle.

### Prior Art

As regards known air-handling devices for elongated vehicles, e.g. buses, several radial blowers are included in the device. The air leaves the blowers at relatively high speed and is either directly blown into the vehicle's roof air ducts or alternatively into a transfer duct between the rooftop unit and the roof air duct. Typically, the known air-handling devices require 90° directional change of the air stream immediately adjacent to the blowers. In this area where the air stream changes direction the air speed drops locally and the static pressure is increased. In areas where supply air outlets to the passenger compartment are installed the static pressure is higher than in other locations. This results in a higher air speed supplied to the passenger compartment. To provide the same comfort to all passengers the air ducts or supply nozzles are provided with restriction means, normally mounted by the vehicle manufacturers. This increases the overall cost of the system and decreases the performance of the device.

From DE 94 22 406 U1 an air-handling device for buses is previously known. The device comprises of inclined blowers that direct the air stream either to the front portion of the bus or to the rear portion of the bus. However, the device according to DE 94 22 406 does not comprise of any means to locally adjust the direction of the air stream.

From DE 44 47 877 C2 an air-distributing device for buses is previously known. Blowers are connected to ducts that extend in the longitudinal direction of the bus. However, there are no means to direct the air when entering the longitudinal ducts. This means that a high pressure is created in the duct portions where the air from the fans enters the ducts. It is only the differential pressure in the ducts that will distribute air in the ducts.

From DE 10 2005 031 220 an air conditioning system is previously known where the distribution of the air in a vehicle is controlled by changing the speed of the blowers that are included in the system, each blower being provided at the end of an adherent air duct. A centrally disposed main blower distributes air to the blowers located at the end of each air duct.

DE 195 35 290 C1 describes a device and method according to the preambles of claims 1 and 3.

### Objects and Features of the Invention

A primary object of the present invention is to present a device of the type defined above, said device reducing local static pressure in the air-distributing means/the roof air duct.

A further object of the invention is to have a uniform climate in the entire vehicle.

Still a further object of the invention is to decrease the operation costs when running the device.

At least the primary object is realised by means of a method and a device that have been given the features of the appending independent claims. Preferred embodiments of the invention are defined in the dependent claims.

### Brief Description of the Drawings

Below an embodiment of the device according to the present invention will be described with reference being made to the accompanying drawings, where:
- Figure 1: shows a section through a portion of the roof of a vehicle that is equipped with an air-handling device according to the present invention;
- Figure 2: shows a view of a number of units that are included in the device according to the present invention, the units being arranged in a row in the longitudinal direction of the vehicle; and
- Figure 3: shows a perspective view of an air turn vane that constitutes an important component of the present invention.

### Detailed Description of a Preferred Embodiment of the Invention

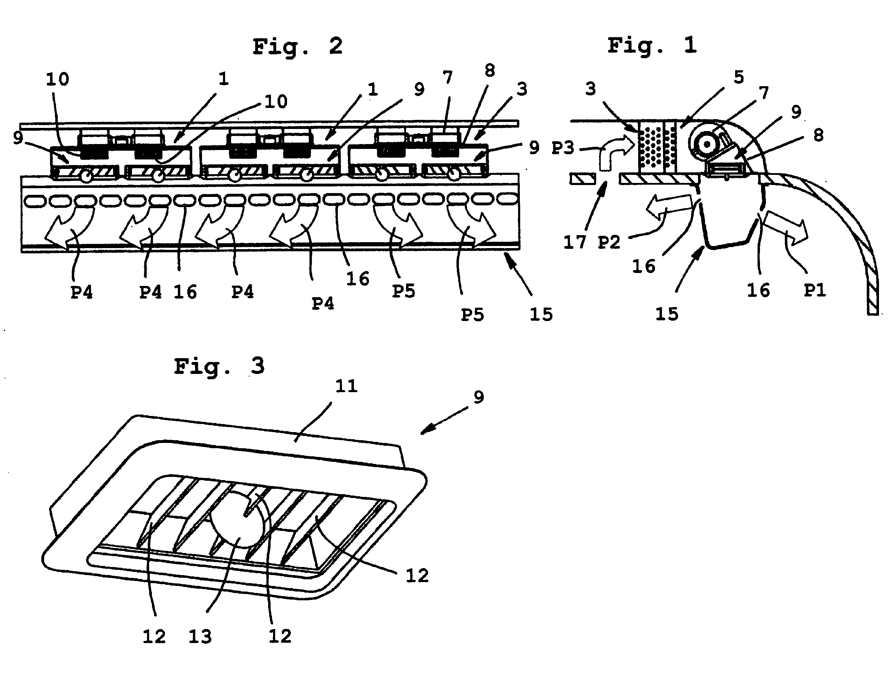

In figures 1 and 2 an embodiment of the device according to the present invention is schematically disclosed. The arrangement disclosed in figures 1 and 2 is located along one side of the vehicle. Normally, a corresponding arrangement is also provided along the other side of the vehicle.

As is evident from figure 2 the device according to the present invention comprises a number of units 1 that are arranged one after the other in the longitudinal direction of the vehicle. In the shown embodiment each unit 1 comprises an evaporator coil 3 and a heater coil 5 that is provided adjacent to the evaporator coil 3. The evaporator coil 3 is used for cooling the air that is handled by the device according to the present invention and the heater coil 5 is used for heating the air that is handled by the device according to the present invention.

Each unit 1 of the device according to the present invention also comprises a blower 7 having its outlet openings 10 directed towards means for active direction of the air, said means in the disclosed embodiment being turn vane units 9 adherent the blower 7. In the disclosed embodiment the blower is of radial type. In the disclosed embodiment each blower 7 is equipped with two outlet openings 10 and consequently two turn vane units 9 are included in each unit 1, said turn vane units 9 being located directly in front of an adherent outlet opening 10. As best seen in Figure 2 a diffuser 8 is provided between the outlet openings 10 and an adherent turn vane unit 9, said diffuser 8 having a widening cross-section towards the turn vane unit 9.

Figure 3 shows a perspective view of a turn vane unit 9 included in the device according to the present invention. As is evident from figure 3 the turn vane unit 9 comprises a frame 11 and a number of parallel turn vanes 12 that are hingedly connected to the frame 11, i.e. the turn vanes 12 being turnable relative to the frame 11. The turn vane unit 9 is preferably of conventional structural design, i.e. the turn vanes 12 are linked together in such a way that when one vane 12 is turned in a certain direction the rest of the vanes 12 are simultaneously turned in the same direction. The turn vane unit 9 is equipped with operating means 13 in the shape of a small disk that is attached to one vane 12. The small disk 13 has an extension transverse to the extension of the vane 12. The adjustment of the vanes 12 is carried out manually by an operater that grips the small disk 13 and displaces the vanes 12 to a desired position. The adjustment could be continuous or in steps.

As is evident from figures 1 and 2 a roof air duct 15 extends in the longitudinal direction of the vehicle. As is best seen in figure 1 the turn vane units 9 are arranged on top of the roof air duct 15, i.e. the turn vane units 9 are mounted in openings in the upper wall of the roof air duct 15. This means that air that passes through the turn vane units 9, in direction from the blowers 7, will enter into the roof air duct 15. In the disclosed embodiment the roof air duct 15 has polygonal cross section. However, within the scope of the present invention the cross section of the roof air duct may vary in numerous ways. On opposite side walls the roof air duct 15 is equipped with numerous outlet apertures 16 that in the disclosed embodiment are in the shape of slots. The outlet air through the apertures 16 is indicated by the arrows P1 and P2 in figure 1.

The device according to the present invention functions in the following way. In figure 1 air is supplied to the device according to the present invention by an inlet opening 17 in the roof of the vehicle, i.e. the supplied air is coming from the passenger compartment. The supplied air is indicated by the arrow P3 in figure 1. In this connection it should be mentioned that the disclosed supplied air is only an example. The supplied air could also be exterior air or a mixture of air from the passenger compartment and exterior air.

The supplied air P3 bypasses the evaporator coil 3 and the heater coil 5. If the evaporator coil 3 is active the bypassing air is cooled and if the heater coil 5 is active the bypassing air is heated. The blowers 7 sucks the air from the adherent evaporator coil 3/heater coil 5 and then the blowers 7 blow the air through the turn vane units 9 and into the roof air duct 15. In connection with the entry of the air into the roof air duct 15 the air is directed in the longitudinal direction of the roof air duct 15, i.e. in the longitudinal direction of the vehicle. The present invention relates to an active direction of the air that entries the roof air duct 15. This is achieved by a certain tilting/turning of the vanes 12 of the turn vane unit 9. This is illustrated schematically in figure 2 where the arrows P4 and P5 indicate the direction of the air that bypasses the turn vane units 9. As can be seen in figure 2 a certain amount of air is directed in one direction, i.e. in the direction of the arrows P4, while a certain amount of air is directed in the opposite direction, i.e. in the direction of the arrows P5. When studying figure 2 it can be seen that the vanes 12 of the turn vane units 9 are turned in opposite directions in order to achieve air streams in opposite directions. Normally, the orientation of the turn vanes 12 are carried out in connection with the mounting of the air-handling device in a vehicle. Normally, no further adjustment is needed but in case such an adjustment is deemed necessary, e.g. if conditions are changed, it could easily be carried out.

By directing the air in streams in opposite longitudinal directions of the roof air duct 15 an increased static pressure is avoided when the air enters the roof air duct 15. Besides the arrangement according to the present invention resolves specific air balancing problems, reduces the required power supplied to the blowers and also reduces the noise in the passenger compartment.

### Feasible Modifications of the Invention

In the disclosed embodiment of the device according to the present invention the orientation of the vanes 12 of the turn vane units 9 are operated manually. Within the scope of the present invention it is however possible to provide an arrangement for remote control of the orientation of the turn vanes 12. It is also possible to have an automatic adjustment of the orientation of the turn vanes 12.

In the disclosed embodiment the vanes 12 of the turn vane units 9 are adjustable as regards to their turning/tilting. According to a simplified concept of the invention the vane units may comprise fixed vanes that have a certain set turning/tilting.

In the disclosed embodiment of the invention the air-handling device according to the present invention comprises an evaporator coil 3 and a heater coil 5. Within the scope of the present invention the evaporator coil 3 and/or the heater coil 5 could be omitted in case there is no need to cool or heat the handled air.

In the embodiment described above the air is moved by means of a blower 7. However, within the scope of the present invention it is possible to use other types of fans or the like to move the air. Therefore, in certain of the appending claims the expression "air moving means" is used.

## Claims

1. Method for handling air when distributing air inside an elongated vehicle, the method comprising supply of air to a roof air duct (15) inside the vehicle, said roof air duct (15) extending in the longitudinal direction of the vehicle,
**characterised in that** when the air enters the roof air duct (15) it passes through openings in a wall of the roof air duct (15), and that in connection with the passage through the openings the air is actively directed in at least one chosen direction by means of turn vane units (9).

2. Method according to claim 1, **characterised in that** the air is directed in two opposite directions.

3. Air-handling device for distributing air inside an elongated vehicle, the device comprising at least one air moving means (7) and a roof air duct (15), the air moving means (7) being attached to the roof air duct (15) inside the vehicle, said roof air duct (15) extending in the longitudinal direction of the vehicle, and that air emanating from the air moving means (7) enters the roof air duct (15),
**characterised in that** turn vane units (9), for active direction of the air, are provided between the outlet side of the air moving means (7) and the roof air duct (15), said turn vane units (9) being mounted in openings in a wall of the roof air duct (15), said means (9) directing the air in at least one chosen direction.

4. Device according to claim 3, **characterised in that** the means (9) for active direction of the air comprises vanes (12).

5. Device according to claim 4, **characterised in that** the vanes (12) are parallel.

6. Device according to claim 4 or 5, **characterised in that** the vanes (12) are adjustable as regards their turning/tilting.

7. Device according to claim 6, **characterised in that** the adjustment of the vanes (12) is carried out manually.

8. Device according to any of claims 4-7,
**characterised in that** the vanes (12) are included in a vane unit (9) that comprises a frame (11), the vanes (12) being hingedly connected to the frame (11).

9. Device according to any of claims 3-8,
**characterised in that** a diffuser (8) is provided between the air moving means (7) and the means (9) for actively directing the air.

## Patentansprüche

1. Verfahren für die Behandlung von Luft, wenn Luft in einem längeren Fahrzeug verteilt wird, wobei das Verfahren die Zufuhr von Luft zu einer Luftleitung (15) im Dach innerhalb des Fahrzeuges aufweist, wobei die Luftleitung (15) im Dach sich in Längsrichtung des Fahrzeugs erstreckt, **dadurch gekennzeichnet, dass** dann, wenn die Luft in die Luftleitung (15) im Dach eintritt, sie durch Öffnungen in einer Wand der Luftleitung (15) im Dach hindurch tritt und dass in Verbindung mit dem Durchgang durch die Öffnungen die Luft mit Hilfe von Umlenkklappeneinheiten (9) aktiv in zumindest einer ausgewählten Richtung gelenkt wird.

2. Verfahren nach Anspruch 1, **dadurch gekennzeichnet, dass** die Luft in zwei entgegengesetzte Richtungen gelenkt wird.

3. Luftbehandlungseinrichtung für die Verteilung von Luft in einem länglichen Fahrzeug, wobei die Einrichtung zumindest eine Luftbewegungseinrichtung (7) und eine Luftleitung (15) im Dach aufweist, wobei die Luftbewegungseinrichtung (7) an der Luftleitung (15) im Dach innerhalb des Fahrzeuges angebracht ist, die Luftleitung (15) im Dach sich in Längsrichtung des Fahrzeugs erstreckt und die Luft, die aus der Luftbewegungseinrichtung (7) austritt, in die Luftleitung (15) im Dach eintritt, **dadurch gekennzeichnet, dass** Umlenkklappeneinheiten (9) für das aktive Lenkens der Luft zwischen der Auslassseite der Luftbewegungseinrichtung (7) und der Luftleitung (15) im Dach vorgesehen sind, wobei die Umlenkklappeneinheiten (9) in Öffnungen in einer Wand der Luftleitung (15) im Dach montiert sind, wobei die Einrichtungen (9) die Luft in zumindest eine ausgewählte Richtung lenken.

4. Einrichtung nach Anspruch 3, **dadurch gekennzeichnet, dass** die Einrichtung (9) für das aktive Lenken der Luft Klappen (12) aufweist.

5. Einrichtung nach Anspruch 4, **dadurch gekennzeichnet, dass** die Klappen (12) parallel verlaufen.

6. Einrichtung nach Anspruch 4 oder 5, **dadurch gekennzeichnet, dass** die Klappen (12) hinsichtlich ihrer Seite und Verkippung einstellbar sind.

7. Einrichtung nach Anspruch 6, **dadurch gekennzeichnet, dass** die Einstellung der Klappen (12) manuell durchgeführt wird.

8. Einrichtung nach einem der Ansprüche 4 bis 7, **dadurch gekennzeichnet, dass** die Klappen (12) in einer Klappeneinheit (9) enthalten sind, welche einen Rahmen (11) aufweist, wobei die Klappen (12) scharnierbeweglich mit dem Rahmen (11) verbunden sind.

9. Einrichtung nach einem der Ansprüche 3 bis 8, **dadurch gekennzeichnet, dass** ein Diffusor (8) zwischen der Luftbewegungseinrichtung (7) und den Einrichtungen (9) für das aktive Lenken der Luft vorgesehen ist.

## Revendications

1. Procédé de traitement de l'air pendant la distribution d'air à l'intérieur d'un véhicule allongé, le procédé comprenant l'alimentation en air dans une gaine d'air de toit (15) à l'intérieur du véhicule, ladite gaine d'air de toit (15) s'étendant dans le sens longitudinal du véhicule,
**caractérisé en ce que**, lorsque l'air pénètre dans la gaine d'air de toit (15), il passe à travers des ouvertures prévues dans une paroi de la gaine d'air de toit (15), et **en ce que**, en ce qui concerne le passage à travers les ouvertures, l'air est activement orienté dans au moins une direction choisie au moyen de l'ensemble d'orientation des déflecteurs (9).

2. Procédé selon la revendication 1, **caractérisé en ce que** l'air est orienté dans deux directions opposées.

3. Dispositif de traitement de l'air permettant de distribuer de l'air à l'intérieur d'un véhicule allongé, le dispositif comprenant au moins un moyen de déplacement d'air (7) et une gaine d'air de toit (15), le moyen de déplacement d'air (7) étant fixé sur la gaine d'air de toit (15) à l'intérieur du véhicule, ladite gaine d'air de toit (15) s'étendant dans le sens longitudinal du véhicule, et en ce que l'air sortant du moyen de déplacement d'air (7) pénètre dans la gaine d'air de toit (15),
**caractérisé en ce que** les ensembles d'orientation des déflecteurs (9), pour une orientation active de l'air,
sont fournis entre le côté sortie du moyen de déplacement d'air (7) et la gaine d'air de toit (15), lesdits ensembles d'orientation des déflecteurs (9) étant montés dans les ouvertures prévues dans une paroi de la gaine d'air de toit (15), lesdits moyens orientant l'air dans au moins une direction choisie.

4. Dispositif selon la revendication 3, **caractérisé en ce que** le moyen (9) permettant d'orienter activement l'air comprend des déflecteurs (12).

5. Dispositif selon la revendication 4, **caractérisé en ce que** les déflecteurs (12) sont parallèles.

6. Dispositif selon la revendication 4 ou 5, **caractérisé en ce que** les déflecteurs (12) sont réglables pour ce qui concerne la possibilité de les faire tourner/basculer.

7. Dispositif selon la revendication 6, **caractérisé en ce que** le réglage des déflecteurs (12) se fait manuellement.

8. Dispositif selon l'une quelconque des revendications 4 à 7,
**caractérisé en ce que** les déflecteurs (12) sont inclus dans un ensemble de déflecteurs (9) qui comprend un cadre (11), les déflecteurs (12) étant raccordés au cadre (11) par une charnière.

9. Dispositif selon l'une quelconque des revendications 3 à 8,
**caractérisé en ce qu'**un diffuseur (8) est fourni entre le moyen de déplacement d'air (7) et le moyen (9) permettant d'orienter activement l'air.
